# EUROPEAN PATENT SPECIFICATION

(11) **EP 3 348 511 B1**
(45) Date of publication and mention of the grant of the patent: **23.03.2022**
(21) Application number: 16843719.2
(22) Date of filing: 09.09.2016
(51) Int. Cl.: B66B 11/02, H04N 7/18, B66B 5/00

(54) **VIDEO SURVEILLANCE EQUIPMENT FOR ELEVATOR CARS**
VIDEOÜBERWACHUNGSAUSRÜSTUNG FÜR AUFZUGSKABINEN
ÉQUIPEMENT DE VIDÉO-SURVEILLANCE POUR CABINES D'ASCENSEUR

(30) Priority: 10.09.2015 ES 201531001 U
(43) Date of publication of application: 18.07.2018
(73) Proprietor: Rec.Videovigilancia, S.L., 31191 Galar (Navarra) (ES)
(72) Inventor: MIGUEL GARATE, José Javier, 31191 Galar (Navarra) (ES); MIGUEL GARATE, Luis Carlos, 31191 Galar (Navarra) (ES)
(86) International application number: PCT/ES2016/070635
(87) International publication number: WO 2017/042414

(56) References cited:
- WO-A1-2004/031063
- CN-A- 1 921 618
- CN-U- 203 855 264
- CN-U- 203 855 264
- JP-A- H1 077 178
- JP-A- 2014 015 289
- JP-A- 2015 016 938
- JP-B2- 4 369 253
- KR-A- 20150 015 777
- KR-B1- 101 201 260

## Description

### OBJECT OF THE INVENTION

The present invention relates to a video surveillance equipment for lift cabins, the evident purpose is to allow recording and subsequent viewing of any event that might occur in the inside the lift cabins, thereby allowing recording vandalism or violence.

### BACKGROUND TO THE INVENTION

Recording systems inside lift cabins are already known, like elsewhere or cockpits, but the current systems suffer from a number of problems and inconveniences among which we can cite its complexity so its high cost is high, and a long assembly time required, which also affects the final cost of the video surveillance unit.

CN203855264U document relates to a transmission system of the lift cabin images based on photoelectric transmission without contemplate its recording in a memory storage unit protected inside a security box.

On the other hand, the document CN1921618A relates to a device video monitoring lift based on the complete digital wireless communication, without describing the possible storage of images near the elevator itself, let alone its preservation in a safe attached to it.

Finally, document JP2015016938A about a device image recording system to record images inside the lift cabin, neither anticipates the presence of a safe for storage therein of the recordings inaccessible to unauthorized manipulation, is also one limited in its application to a small number of elevator by placing together in a block and the box with the rest of the elements.

In addition, recording systems or video surveillance inside lift cabins have the disadvantage of providing a high degree of complexity at the time of subsequent repair and maintenance, due to the interaction that occurs with elements of the elevator which also prevent the normal functioning of the same while video surveillance system problems are resolved.

### DESCRIPTION OF THE INVENTION

The proposed equipment has been conceived to solve the above mentioned problems forming a unit or equipment that can be mounted inside a lift cabin in a record time, with complete simplicity, with little wiring and without interaction with elements of the elevator, except the electrical outlet.

More specifically, video surveillance equipment of the invention is formed of a box placed for example on the roof of the lift cabin, thereby hidden inside the elevator shaft, the box contains a hard drive or storage unit being connected to one or more unnoticed recording cameras anywhere inside the cabin, thereby allowing recording inside and can be installed a single recording camera or more, in which latter case would covered all corners and parts inside the cabin.

The box where is located the hard disk or memory storage unit associated to a wireless module communications or wifi router is sealed and equipped with a safety lock to prevent unauthorized tampering, also resulting small and mountable at any part of the roof of the lift cabin.

The hard drive or storage unit is programmed to accumulate and store recordings in the time allowed by current legislation on data protection.

The whole equipment is integrated with the elements of the lift cabin, so it complies with the rules of lifting devices, and coming already mounted on the metal housing, sealed and lockable, and having the power and image cords prepared for connection to inspection keypad plug of lift cabin and to the pickup images camera located inside the cab, finally a wireless connection can be foreseen between these elements, which allows test correct operation of the unit without physically access allowing periodic functional checks very comfortably.

Obviously, the power supply that can be used may be any that may exist on the roof of the lift cabin, so long wiring or additional works are no needed when carrying out the equipment installation.

It also has the advantage that in case of failure it can be replaced very quickly, only disconnecting the faulty equipment and plugging a new equipment or a eventual replacement equipment, while the faulty unit is repaired, thus preventing the lift is out of order or unattended.

Such equipment is provided with various security systems to prevent unwanted access to its contents, apart from sealing the box itself, the hard drive or memory unit carries a security code, and so does the wireless module communications or router wifi.

The availability of a wireless communications module allows a remote access to recordings, watch and even eliminate them, greatly simplifying installation and revisions over traditional systems.

The wireless connection has a limited coverage radius, which has the advantage of hindering unwanted intrusions because their limited coverage radius forces to act in the vicinity of the equipment.

### DESCRIPTION OF THE DRAWINGS

To complement the description that is going to be made and to assist a better understanding of the invention characteristics, according to a preferred practical embodiment thereof, accompanying as an integral part of said description, a set of drawings where an illustrative and not limitative character, shows the following:

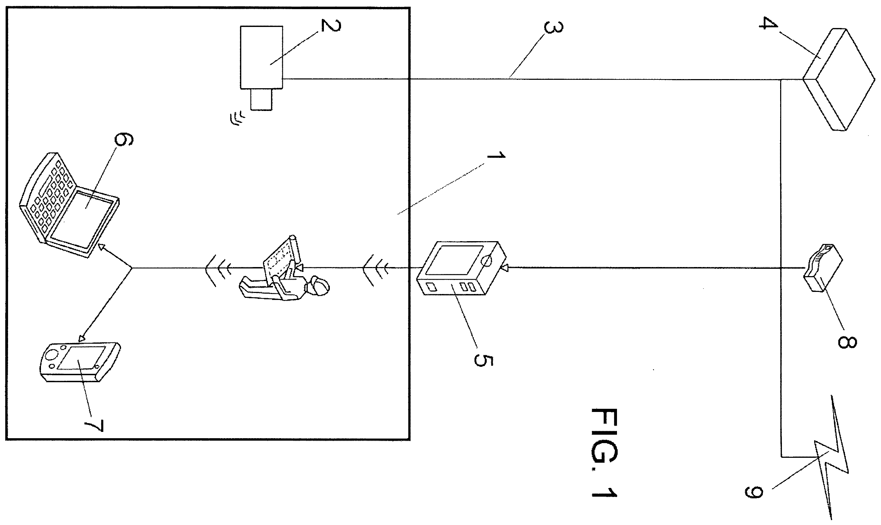

Figure 1 shows a schematic representation relative to the main elements involved in the equipment of the invention and its installation, all carried out according to the object of the present invention.
Figure 2 shows as an example a perspective view from inside the elevator, seeing how therein a recording camera is provided as only element that is exposed of the equipment.

### PREFERRED EMBODIMENT OF THE INVENTION

As it can be seen in the mentioned figures, the device of the invention is intended to be mounted inside a lift cabin (1), and it is perfectly integrated with the decoration that includes the mentioned lift cabin, being visible or exposed only the corresponding recording camera (2).

This recording camera (2) is embodied in a video camera, which is wire connected (3) to a recording device equipped with a hard drive or storage unit (4) which together with a wireless module communications or router wifi (8) is placed inside a small safety box (5), intended to be mounted concealed in the ceiling of the lift cabin (1), connecting to the corresponding socket (9).

Thus, the box (5) consists of a security box into which are set the devices data storage and transmission thereof wirelessly, for further analysis by suitable equipment (6-7).

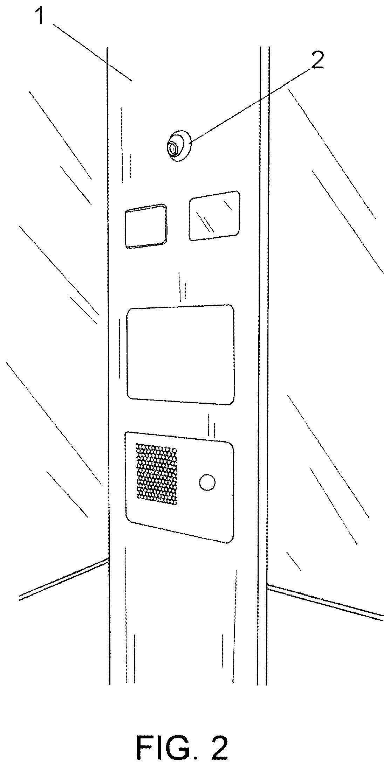

As seen in Figure 2, the recording camera (2) is the only element of equipment that is visible from inside the lift cabin which is installed so as to pass the most unnoticed possible.

This makes it possible to capture any violent or antisocial act that could carried out inside the elevator.

## Claims

1. Video surveillance equipment for lift cabins, which is of the type which allow to carry out security recordings inside lift cabins, **characterized in that** it is constituted from a safety box (5), sealed and equipped with a safety lock, provided with mounting means on the roof of the lift cabin (1), box (5) within which there is a recording equipment with hard drive or memory storage unit (4), safety box (5) which is associated to one or more recording cameras (2) wire connected (3) to the recording equipment equipped with a hard disk or memory unit (4) and located in correspondence with the interior of the lift cabin (1).

2. - Video surveillance equipment for lift cabins according claim 1, **characterized in that** the box (5) containing the image storage disc (4) and the wireless communications module (8) is sealed and provided with safety means tamper.

3. - Video surveillance equipment for lift cabins according claims 1 and 2, **characterized in that** the safety box (5) incloses a wireless communications module (8) of limited coverage radius for transmission of the stored images to other equipments (6-7) located remotely but within the limited coverage radius.

## Patentansprüche

1. Videoüberwachungsausrüstung für Aufzugskabinen, die die Ausführung von Sicherheitsaufzeichnungen im Innern von Aufzugskabinen ermöglicht und **dadurch gekennzeichnet ist, dass** sie aus einem verplombten, mit Sicherheitsschloss versehenen und mit Elementen zur Montage auf dem Dach der Aufzugskabine (1) ausgestatteten Sicherheitskasten (5) besteht, in dessen Inneren sich ein Aufzeichnungsgerät mit Festplatte oder Speichereinheit (4) befindet; ein Sicherheitskasten (5), der einer oder mehreren Kameras (2) zugeordnet ist, die mittels Kabel (3) an das mit Festplatte oder Speichereinheit (4) ausgestattete Aufzeichnungsgerät angeschlossen und in Übereinstimmung mit dem Innern der Aufzugskabine (1) platziert ist beziehungsweise sind.

2. Videoüberwachungsausrüstung für Aufzugskabinen gemäß Anspruch 1, **dadurch gekennzeichnet, dass** der Kasten (5), in dem sich die Festplatte für die Bildspeicherung (4) und das drahtlose Kommunikationsmodul (8) befinden, verplombt und mit Manipulationssicherungen versehen ist.

3. Videoüberwachungsausrüstung für Aufzugskabinen gemäß den Ansprüchen 1 und 2, **dadurch gekennzeichnet, dass** der Sicherheitskasten (5) ein kabelloses Kommunikationsmodul (8) enthält, das eine begrenzte Reichweite für die Übertragung der gespeicherten Bilder an andere Geräte (6-7) aufweist, welche sich an einem entfernten Standort jedoch innerhalb der begrenzten Reichweite befinden.

## Revendications

1. Équipement de vidéo-surveillance pour cabines d'ascenseur, du type de ceux qui permettent d'effectuer des enregistrements de sécurité à l'intérieur des cabines d'ascenseur, qui se **caractérise par** le fait d'être constitué d'un boîtier de sécurité (5), scellé et pourvu d'un verrouillage de sécurité, équipé de moyens de montage sur le toit de la cabine de l'ascenseur (1), d'un boîtier (5) à l'intérieur duquel se trouve un équipement d'enregistrement avec disque dur ou unité de mémoire (4), un boîtier de sécurité (5) associé à une ou plusieurs caméras d'enregistrement (2) connectées par câble (3) à l'équipement d'enregistrement pourvu d'un disque dur ou d'une unité de mémoire (4) et situées en correspondance avec l'intérieur de la cabine de l'ascenseur (1).

2. Équipement de vidéo-surveillance pour cabines d'ascenseur selon la revendication n° 1, qui se **caractérise par le fait que** le boîtier (5) contenant le disque de stockage d'images (4) et le module de communications sans fil (8) est scellé et pourvu de moyens de sécurité anti-effraction.

3. Équipement de vidéo-surveillance pour cabines d'ascenseur selon les revendications n° 1 et 2, qui se **caractérise par le fait que** le boîtier de sécurité (5) contient un module de communications sans fil (8) avec un rayon de couverture limité pour la transmission des images enregistrées vers d'autres équipements (6-7) situés à distance, mais dans le rayon de couverture limité.
